# EUROPEAN PATENT SPECIFICATION

(11) **EP 0 688 512 B1**
(45) Date of publication and mention of the grant of the patent: **13.01.1999**
(21) Application number: 95201623.6
(22) Date of filing: 16.06.1995
(51) Int. Cl.: A43B 9/16, A43B 5/00

(54) **Manufacturing process of technical mountain climbing footwear and the product obtained**
Verfahren zur Herstellung eines technischen Kletterschuhs und hergestelltes Produkt
Procédé de fabrication d'une chaussure d'escalade et produit obtenu

(30) Priority: 20.06.1994 ES 9401345
(43) Date of publication of application: 27.12.1995
(73) Proprietor: BORFIR INTERNACIONAL, S.L., 03005 Alicante (ES)
(72) Inventor: Garcia Lopez, Jesus, Villena (Alicante) (ES)
(74) Representative: Ungria Lopez, Javier

(56) References cited:
- EP-A- 0 565 913
- DE-A- 2 918 250
- DE-A- 3 147 558
- FR-A- 2 556 570
- US-A- 3 693 269
- US-A- 3 987 510
- US-A- 4 716 663
- US-A- 5 315 767

## Description

As is expressed in the title of this specification, the present invention refers to a manufacturing process of technical mountain climbing footwear and the product obtained, whereby a series of relevant and advantageous characteristics are provided in this technical sector of the world of mountain climbing, mainly regarding the improvement of the technical use implied by the use of a new closed single-piece body that constitutes the basic element of the mountain climbing shoe or boot. This process permits obtainment of footwear at a lower cost, with reduced labor, with better quality and technical performance, and in a single vulcanization or injection process that allows the application of some parameters of hardness, thickness, tightness , bending, adaptability and final compression calculated ergonomically, in a piece of continuous curvature and without any dead angles, without connection or antagonistic stresses causing the footwear to become deformed, all of this irrespective of the thickness of the same.

This manufacturing process starts with an injected or vulcanized body, in a single piece, which comprises the sole and the reinforcements of the toe piece, the heel, strips and sides, all integrated and with their necessary tightness.

The shell of the shoe thus obtained, semi-enveloping of the foot with a variable thickness and side asymmetry, has a pronounced plantar arch and continuous peripheral curvature, each area of the footwear adapted ergonmically to the foot.

In free mountain climbing, aside from the corresponding skill and physical preparation, the sportsman needs footwear that allows him to recognize the support point, thanks to the sensitivity of the corresponding foot, that has a calculated commitment between hardness, that collabortes to broaden the supported surface and flexibility, that allows its adaptability to the situation of each compromising situation, these circumstances not entirely resolved by conventional footwear.

An important condition to be complied with, consists of compressing the foot adequately to the desired response, since for example, when the toes are naturally extended, they would not be capable of supporting the weight of our body, if we had to rest their front end portion on a reduced edge in view of the needs to lever, to keep the weight of the body and even, for possible needs to turn the body during this change of position.

Presently the sole and rubber pieces of the shoe or boot are formed from pieces of large plates or rolls of continuous rubber, with a constant thickness, that are stamped and glued. These different rubber parts are: toe pieces, sides, heels and soles, all of them being applied separately, one by one, by means of gumming and gluing each time, by hand, the part of the boot as well as the corresponding rubber piece.

This conventional manufacturing process involves a series of disadvantages, among which we can cite the following:
- It constitutes a very slow manufacturing process: manufacturing time of a pair, approximately 8 hours.
- Upon using flat pieces, even obtained with very strained patterns, they maintain an antagonism between the original form thereof and the curved one to which they must adapt, hence, they always try to return to their original position and thus the shoe tends to deform more, impeding the better technical utilization thereof.
- They have a sole thickness given that upon having to cut the pieces on plates or flat rolls of a constant thickness, it is impossible to provide different thicknesses to the length, width and height of the shoe, depending on the points where it would be interesting to protect the mountain climber's foot.
- The inside part of all of the rubber pieces, which surround the foot, in the connection part between the side and the sole form a sharp angle that impedes a greater adaptation of the edge of the sole of the foot which is rounded, leaving air gaps between both.
- Between the top side pieces, that have been glued together, one by one, and subsequently glued in turn to the sole, there is always movement that throws off balance a little the edging work in climbing.
- There is presently a lack of support due to movement between the glued rubber pieces, it being very difficult to secure it more, since the combination of loose pieces glued with adhesive, produces small transversal as well as longitudinal movements.
- Discomfort above all in the toe piece, as this piece of rubber is too tight. Having to stretch, so that the flat rubber surface adapts, as best as possible to this area with so many curves, and that can exert adequate tightness to the shoes, makes toes suffer too much at times.
- In the present system, one is always subject to the possibility that different pieces start to become detached and not only due to manufacturing faults, but also as a result of friction, upon applying pressure on the rubber pieces, against the rock.

Upon being hand work, the gluing of each piece of rubber and the subsequent fastening thereof, to obtain the adequate forms and lines, with their slants and formaiton of specific angles, it is impossible to ensure the productive repetition, between shoes, whereby greater precision cannot be obtained.
- Impossibility to flexibilize production, in a short or average time, the present process being so slow, complex and manual (45 operations) which makes it impossible to make the same more automatic, it being very difficult to increase or decrease the production rapidly and reasonably, preventing work with a better response to the needs of the present market.

The preambles of the independent claims define the features of the invention that correspond to the prior art described above. Furter examples of prior art are disclosed in EP-A-0 565 913 and US-A-5 315 767:

EP-A-0 565 913 discloses a set of footwear for rock climbing, comprising a shoe consisting of an upper and a bottom part, and a replaceable sole part with a side portion.

US-A-5 315 767 discloses a "sole saver" comprising a rubber body which is to be applied to an athletic shoe.

In broad outline, the manufacturing process of mountain climbing footwear, the basic element used and the product obtained, which constitute the object of the invention as claimed, is based on the use of an element comprised of an integrated single piece, of a closed and enveloping body that includes therein, the different rubber parts: toe pieces, sides, strips, heels and soles, which are presently applied separately to achieve the final product. The integrated piece or single-piece body, in accordance with the invention, can be made of natural or synthetic rubber, or any other material which due to the characteristics of adherence, hardness and abrasion, can be used for mountain climbing footwear, and can be made by means of a vulcanization or injection process (with adequate molds), either to form the integrated part on the one hand, separately, and then glue it to the shoe upper means of adhesive, or else, inject it directly to the upper, during manufacturing.

In both cases one must start with the obtainment of some molds, with some dimensions of length, width and height, smaller than that of the mountain climber's foot or shoe tree, so that the piece of rubber or material that substitutes it, can have a tightness equal to or better than in the present process and to exert the necessary pressure on the shoe upper and, as a result, on the foot, which makes one able to practice mountain climbing at a higher technical level.

In the manufacturing process of footwear, in accordance with the invention, and once the integrated single piece has been obtained by the vulcanization or injection process, the steps of assembly of the boot or shoe are minimized, since the number of steps is reduced to: placement of a compact integrated piece or enveloping sole itself to the section or upper mounted on the shoe tree.

Among the advantages achieved with the new process and the obtained product, we can enumerate the following, placing them parallel to the disadvantages cited above in connection with the present or conventional process and the final product manufactured up until now:
- Very rapid and simple manufacturing process: manufacturing time of a pair, approximately 40 minutes.
- Maximum productive flexibility in minimum time. The new process, much quicker, simpler and mechanized (6 operations), permits greater automatization and rapidity, whereby the production can be varied rapidly and the needs of the market can be adequately met. In short, it is much more flexible.
- Upon the sole being enveloping, of a single piece and with rounded shapes, manufactured by vulcanization or injection, upon a mold that has the necessary rounded and flat shapes, the integrated piece that is applied to the shoe, maintains its shapes perfectly and benefits technically from the use thereof, since there are practically no deformations in the final product.
- Upon being formed in a single vulcanized or injected piece, upon a mold, the mold can be designed so that each part can have the thickness needed to obtain the better shape and use of the shoe.
- The inside connection of walls/soles with the curved radii, makes it possible for this enveloping sole or single-piece body to surround and adapt much better to the rounded shape of the sole of the mountain climber's foot.
- Upon this piece being compact, there is no strange movement that can throw off balance the edging work, but rather on the contrary, one notices help in this sense upon climbing.
- Maximum fastening is achieved upon being an entire compact piece, since aside from the single piece characteristic and as there is no glued connection, the fastening can be adjusted with the differences of thicknesses and tightnesses.
- The integrated piece, upon having some definitive shapes, obtained from their origin in the mold, permits the tightness to be more even and also lesser (as a result of the differences of thicknesses), which provides the mountain climber with greater comfort.
- Impossibility of the pieces from becoming unglued, since it is a single integrated and compact piece.
- The integrated piece, once the mold has been defined for each style, which comes out of the same, is always identical, therefore the repetitiveness as well as the precision are ensured if the prototype of the mold is perfect.

Due precisely to the single piece shape of the enveloping body, it becomes possible to easily replace the sole, unlike the complex process of the present technique. In effect, in the present art, to replace a sole the following steps must be carried out: insert a shoe tree in the shoe; reactivate, with heat, the sole (affecting the nearby pieces); unglue the sole; repair the damaged rubber pieces; smooth the bottom part of the shoe; glue the shoe and the new sole; press the sole; smooth the final edge. This implies a total of eight operations.

To replace the sole according to the invention, some small cores that cover it have been inserted in the molds, in the front area of the sole. As a result thereof, in the single piece coming out of the cited mold, one can see in the inside bottom part thereof (front part of the sole), some small holes that will serve afterwards as a reference. When the sole becomes worn through use a time comes when some of these small holes appear at the outside. This is when the half sole is to be replaced in the following manner: first of all the half sole of the shoe is flattened by smoothing it until all of the small holes appear; adhesive is applied to the sole of the shoe and to the loose half sole; this half sole is pressed to the shoe; and the edges are smoothed for the final finish. Hence, only four operations are carried out.

In order to provide a better understanding of the features of the invention and forming an integral part of this specification, some sheets of drawings in whose figures, the following has been represented in an illustrative and non-restrictive manner, are attached hereto.
Figure 1 is a plan view of the different pieces that take part in the forming of a conventional boot, to assemble them to the mounted section, in accordance with the conventional prior art manufacturing system.
Figure 2 shows sequentially the different phases or steps of the conventional manufacturing process, wherein the pieces of figure 1 are used.
Figure 3 shows the sole piece that takes part in the formation of a boot, according to the invention, seen in two different perspectives and which is to be joined to the mounted section.
Figure 4 shows the only step of the manufacturing process, to obtained the assembled shoe , according to the invention.
Figure 5 is a cross section of the integrated piece or single-piece body coming out of the mold, where the small holes and cores of both can be seen.

Making reference to the numbering used in the figures showing the manufacturing process of the prior art system where a large number of pieces and operations take part, as well as in the manufacturing process in accordance with the invention, wherein a smaller number of pieces and operations is required, we can see that, the relation of operations in a standard style that are carried out in the prior art manufacturing process and on a conventional conveyor line, is greater than in connection with the manufacturing with the new process for mountain climbing shoes, which remains possible upon having been done upon an automatic conveyor system, producing a drop of costs.

In the prior art system, for manufacturing the cited model 45 operations must be carried out to make a pair, with a total of 35 minutes 57 seconds. These conventional operations are the following:

Stamp the middle sole; stamp the filling; stamp the rubber strip; stamp the rubber heel; stamp the rubber strips; stamp the rubber soles; divide the rubber soles; flatten the middle sole; flatten the rubber strip; flatten the rubber sole; flatten the rubber strip; smooth by flattening the strip; smooth by flattening the heel; smooth by flattening the strip; smooth soles; brush the heel; brush the strip; brush soles; glue transfer to the soles; glue transfer to the strips; gum the filler; gum the shoe; press the filler; comb the assembled shoe; gum the middle sole; gum the assembled shoe; press the middle sole; gum the rubber heel strip; gum the shoe (heel strip area); press the rubber heel strip; gum the rubber strips; gum the shoe (strips area); press the rubber strips; smooth the rubber strip ends; gum the rubber heels; gum the shoe (heel area); press the rubber heels; smooth and brush the assembled rubber area; gum the rubber sole; gum the shoe (sole area); press rubber soles; feather rubber sole edges; smooth and brush rubber sole edges; remove staples and cut threads; put on the size and remove shoe trees.

According to the invention the number of operations is simplified enormously given that the same are reduced to only 6, with a total time of 4 minutes 31 second for the manufacturing of the same pair. The operations are the following:

Comb the assembled shoe; gum the rubber soles; gum the shoe (sole area); press the rubber sole; remove staples and cut threads; put on the size and remove shoe trees.

All of this has the consequence of a saving in manufacturing time of one pair of 31 minutes 26 seconds, also with the possibility of reducing this time by 2 minutes and 53 seconds if automatic conveyance is used, which amounts to a total saved time of 34 minutes 19 seconds.

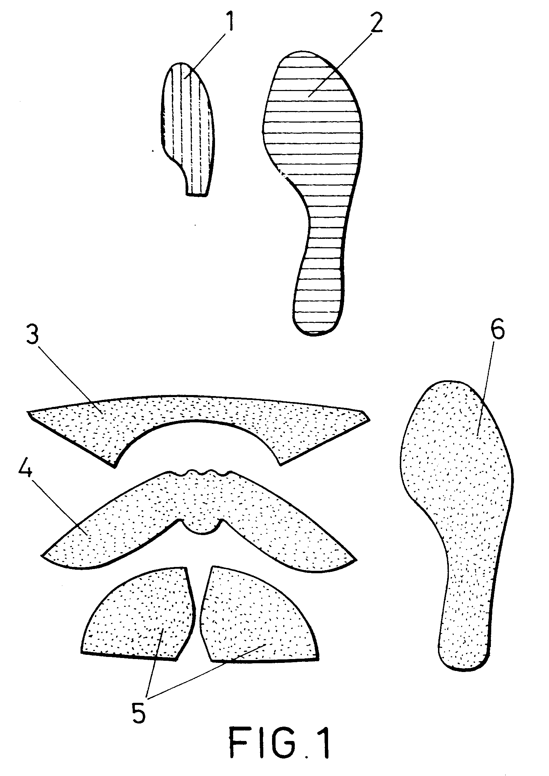

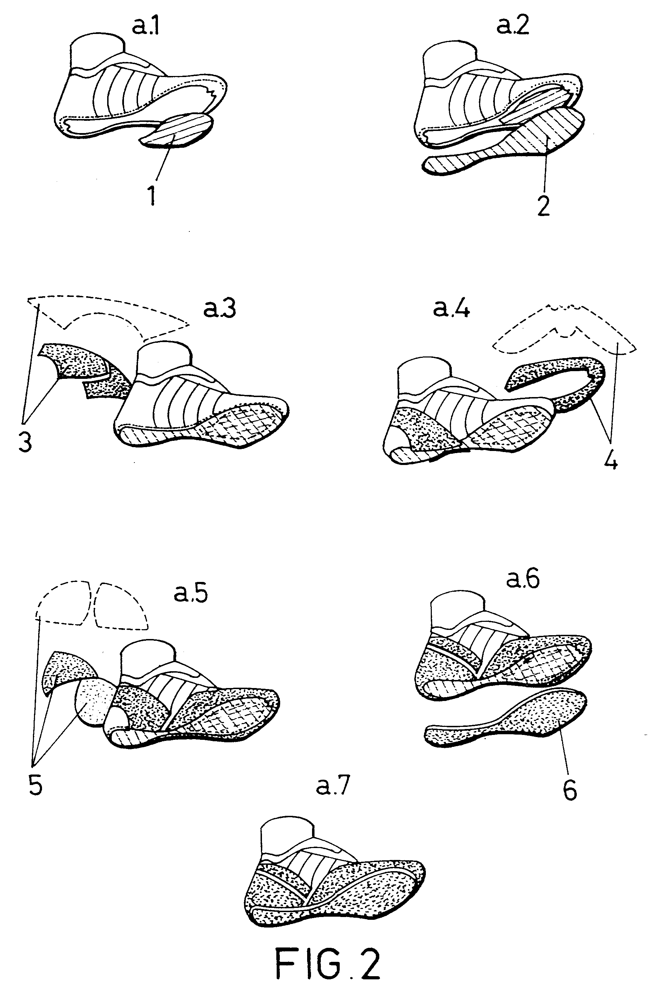

In figure 1 we can see the total number of pieces that have to be joined to the mounted section or upper, in the traditional prior art system. Reference 1 corresponds to the filler, reference 2 to the middle sole. References 3, 4 and 5 show respectively: the rubber strip, the rubber strip and rubber heels, which have to be assembled on the parts of the shoe indicated, and which can be clearly seen in figure 2. Reference 6 shows the rubber sole.

With these pieces numbered 1 to 6, the assembling according to the prior art system includes the six steps of figure 2, showing that in the first place the filler 1 is placed. Then the middle sole 2 is put in place. Then the rubber strip 3 is put in place, Afterwards, the rubber strip 4 is put in place. Then the rubber soles 5 are put in place. After the rubber sole 6 has been put in place, the boot remains finished just as is seen in the final position of this figure 2.

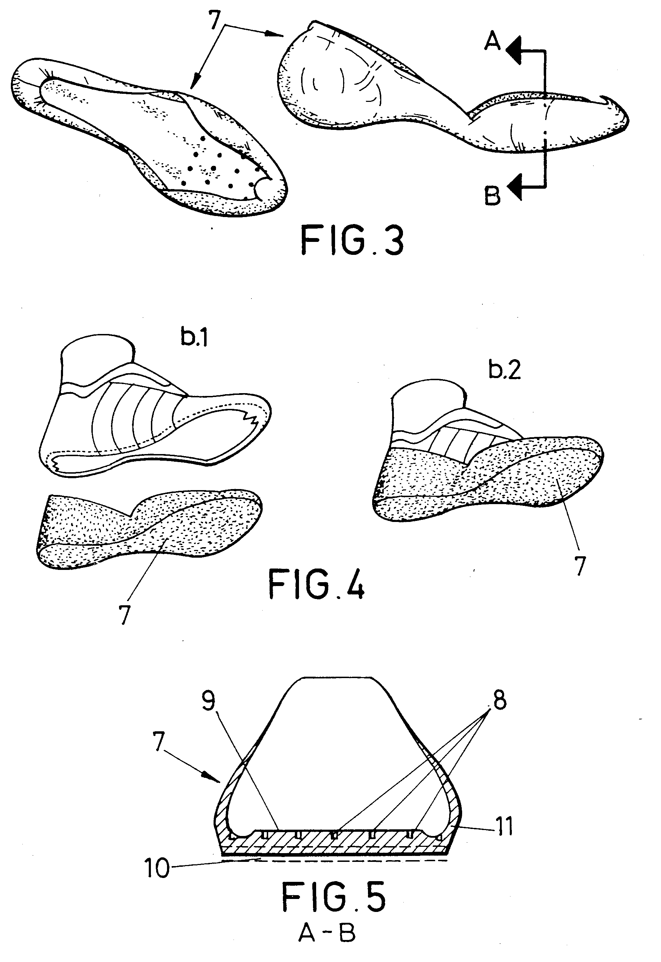

According to the invention and as is seen in figures 3 and 4, in the manufacturing process of mountain climbing footwear, only piece reference number 7 which corresponds to the compact integrated piece or single-piece body is needed.

As is indicated in figure 4, the assembly steps are greatly simplified, aside from achieving the advantageous features set forth at the beginning, remaining in a single operation:

The compact integrated piece 7 or single-piece body obtained by means of a mold, either by vulcanization or injection, is put in place, thus obtaining the finished boot, as shown in the final assembly step of figure 4.

In figure 5, we can see a cross section of the compact integrated piece, which has in the front part a series of non-through holes 8 made by the cores that the mold includes, which will appear on the outside of the sole when wear due to use is produced. This indicates the moment of applying a new sole insinuated by means of a dash line with reference 10. Reference 9 shows the center rib of the inside, which acts as a filler when connected with the assembled section of the shoe.

The peripheral inside continuous curvature 11 produces perfect ergonomic adaptability, to the curvature of the foot of the compact integrated piece 7.

## Claims

1. Technical mountain climbing footwear, which comprises an upper and, attached to said upper and surrounding said upper, a sole (6), reinforcement means (3) for the top part of the heel, reinforcement means (4) for the toe piece and the sides, reinforcement means (5) for the heel, said reinforcement means (3, 4, 5) and said sole being made of a substantially elastic material,
characterized in that
said reinforcement means (3, 4, 5) and the sole (6) are constituted by a single-piece body (7) formed in a mold by vulcanization or injection; the inside dimensions of said single-piece body are, in certain areas, smaller that the outside dimensions of the part of the upper which it surrounds, in such a way that said single-piece body (7) exerts stress and pressure upon being applied around said upper, necessary for the correct fastening of the mountain climber's foot.

2. Technical mountain climbing footwear, according to claim 1, characterized in that the single-piece body (7) inside it includes small non-through holes (8) that will serve as an indication of the degree of wear of said single-piece body.

3. Technical mountain climbing footwear, according to claim 2, characterized in that the small holes (8) are located in the front part of the single-piece body (7.)

4. Technical mountain climbing footwear, according to any of the above claims, characterized in that the single-piece body (7) has in the connection area of the sides with the sole, an inside continuous peripheral curvature (11), the eliminates non-ergonomic angles, improving the adaptability of the footwear to a user's foot.

5. Technical mountain climbing footwear, according to any of the above claims, characterized in that the single-piece body (7) includes a center rib (9) in the front inside area of the single-piece body (7), whose center rib (9) acts as a filler when the single-piece body (7) is connected to the upper.

6. Technical mountain climbing footwear, according to any of the above claims, characterized in that the single-piece body (7) has been manufactured in a mold separately and then glued to the upper mounted on the shoe tree by means of adhesive.

7. Technical mountain climbing footwear, according to any of claims 1-5, characterized in that the single-piece body (7) has been injected directly onto the upper during manufacturing of the single-piece body in the mold.

8. Technical mountain climbing footwear, according to any of the above claims, characterized in that the thickness of the single-piece body (7) is different in different parts of the same.

9. Technical mountain climbing footwear, according to any of the above claims, characterized in that the single-piece body (7) is made out of natural or synthetic rubber or any other material of similar characteristics.

10. Technical mountain climbing footwear, according to any of the above claims, characterized in that inside the single-piece body (7) it includes some filling means (1).

11. Method for manufacturing technical mountain climbing footwear, which comprises attaching a sole (6), reinforcement means (3) for the top part of the heel, reinforcement means (4) for the toe piece and the sides and reinforcement means (5) for the heel to an upper such that said sole (6) and reinforcement means (3, 4, 5) surround said upper, said sole (6) and reinforcement means being made of a substantially elastic material,
characterized in that
said sole (6) and reinforcement means (3, 4, 5) made up of a single-piece body (7) formed in a mold by vulcanization or injection, said single-piece body having some inside dimensions of length, width and height which are smaller than the outside dimensions of said upper, in such a way that said single-piece body (7) exerts stress on said upper.

12. Method according to claim 11, characterized in that a mold that includes small cores is used in such a way that the single-piece body (7) manufactured includes inside it small non-through holes (8), that will serve as an indication of the degree of wear of said single-piece body (7.)

13. Method according to claim 12, characterized in that the cores are located in the part of the mold that corresponds to the front inside part of the single-piece body (7.)

14. Method according to claim 11, characterized in that a mold is used that has curved areas that gives rise to a continuous inside peripheral curvature (11) in the connection area of the sides with the sole.

15. Method according to any of claims 11 to 14, characterized in that a mold is formed so that the single-piece body (7) manufactured includes a center rib (9) in the front inside area of the single-piece body (7), whose rib acts as a filler when the single-piece body (7) is conencted to the upper, is used.

16. Method according to any of claims 11 to 15, characterized in that the single-piece body (7) is manufactured in a mold separately and then glued to the upper mounted on the shoe tree by means of adhesive.

17. Method according to any of claims 11-15, characterized in that the single-piece body (7) is attached to the upper by means of injecting the single-piece body directly onto the upper during manufacturing of the single-piece body in the mold.

18. Method according to any of claims 11 to 17, characterized in that a mold formed so that the thickness of the single-piece body (7) remains different in different parts of the same, is used.

19. Method according to any of the claims 11 to 18, characterized in that natural or synthetic rubber or any other material with characteristics similar to those of rubber is used for the single-piece body (7).

20. Method according to any of claims 1 to 19, characterized in that the single-piece body (7) is manufactured in such a way that it also comprises filling means (1).

## Patentansprüche

1. Technischer Kletterschuh, der ein Obermaterial und eine an dem Obermaterial angebrachte und das Obermaterial umgebende Sohle (6), Verstärkungsmittel (3) für den Oberteil des Hackens, Verstärkungsmittel (4) für den Zehenteil und die Seiten, Verstärkungsmittel (5) für den Hacken umfaßt, wobei die Verstärkungsmittel (3, 4, 5) und die Sohle aus einem im wesentlichen elastischen Material angefertigt sind,
**dadurch gekennzeichnet, daß**
die Verstärkungsmittel (3, 4, 5) und die Sohle (6) aus einem einstückigen Körper (7) gebildet sind, der in einer Form durch Vulkanisation oder Einspritzen geformt ist, wobei die Innenabmessungen des einstückigen Körpers in bestimmten Bereichen kleiner sind als die Außenabmessungen des von dem einstückigen Körper umgebenden Obermaterialstücks, in der Weise, daß der einstückige Körper (7), nachdem er um das Obermaterial herum aufgebracht wurde, Spannung und Druck ausübt, die für den korrekten Halt des Fußes des Kletterers notwendig sind.

2. Technischer Kletterschuh nach Anspruch 1, **dadurch gekennzeichnet, daß** der einstückige Körper (7) innen kleine Sacklöcher (8) aufweist, die als Anzeige für den Verschleißgrad des einstückigen Körpers dienen werden.

3. Technischer Kletterschuh nach Anspruch 2, **dadurch gekennzeichnet, daß** die kleinen Löcher (8) im Vorderteil des einstückigen Körpers (7) liegen.

4. Technischer Kletterschuh nach einem der vorhergehenden Ansprüche, **dadurch gekennzeichnet, daß** der einstückige Körper (7) in dem Verbindungsbereich der Seiten mit der Sohle eine kontinuierliche Innenumfangskrümmung (11) besitzt, die nicht ergonomische Winkel eliminiert, was die Anpaßbarkeit des Schuhs an den Fuß der Trägerperson verbessert.

5. Technischer Kletterschuh nach einem der vorhergehenden Ansprüche, **dadurch gekennzeichnet, daß** der einstückige Körper (7) in seinem vorderen Innenbereich eine Mittelrippe (9) beinhaltet, die als ein Füllelement agiert, wenn der einstückige Körper (7) mit dem Obermaterial verbunden wird.

6. Technischer Kletterschuh nach einem der vorhergehenden Ansprüche, **dadurch gekennzeichnet, daß** der einstückige Körper (7) separat in einer Form hergestellt wurde und dann mittels Klebstoff an dem auf einen Schuhspanner aufgebrachten Obermaterial angeklebt wurde.

7. Technischer Kletterschuh nach einem der Ansprüche 1 - 5, **dadurch gekennzeichnet, daß** der einstückige Körper (7) während des Herstellens des einstückigen Körpers in der Form direkt auf das Obermaterial eingespritzt wurde.

8. Technischer Kletterschuh nach einem der vorhergehenden Ansprüche, **dadurch gekennzeichnet, daß** die Dicke des einstückigen Körpers (7) in verschiedenen Teilstücken verschieden ist.

9. Technischer Kletterschuh nach einem der vorhergehenden Ansprüche, **dadurch gekennzeichnet, daß** der einstückige Körper (7) aus Natur- oder Synthetikgummi oder einem anderen Material mit ähnlichen Eigenschaften hergestellt ist.

10. Technischer Kletterschuh nach einem der vorhergehenden Ansprüche, **dadurch gekennzeichnet, daß** der einstückige Körper (7) innen einige Füllmittel (1) beinhaltet.

11. Verfahren zur Herstellung eines technischen Kletterschuhs, das umfaßt: Anbringen einer Sohle (5), Verstärkungsmittel (3) für den Oberteil des Hackens, Verstärkungsmittel (4) für den Zehenteil und die Seiten und Verstärkungsmittel (5) für den Hacken an einem Obermaterial, dergestalt, daß die Sohle (6) und die Verstärkungsmittel (3, 4, 5) das Obermaterial umgeben, wobei die Sohle (6) und die Verstärkungsmittel aus einem im wesentlichen elastischen Material hergestellt sind,
**dadurch gekennzeichnet, daß**
die Sohle (6) und die Verstärkungsmittel (3, 4, 5) aus einem einstückigen Körper (7) hergestellt werden, der in einer Form durch Vulkanisation oder Einspritzen geformt wird, wobei der einstückige Körper einige Längs-, Breiten- und Höheninnenabmessungen hat, die kleiner sind als die Außenabmessungen des Obermaterials, dergestalt, daß der einstückige Körper (7) eine Belastung auf das Obermaterial ausübt.

12. Verfahren nach Anspruch 11, **dadurch gekennzeichnet, daß** eine Form, die kleine Kerne beinhaltet, dergestalt verwendet wird, daß der hergestellte einstückige Körper (7) innen kleine Sacklöcher (8) aufweist, die als eine Anzeige für den Verschleißgrad des einstückigen Körpers (7) dienen werden.

13. Verfahren nach Anspruch 12, **dadurch gekennzeichnet, daß** die Kerne in dem Teilstück der Form plaziert werden, das dem vorderen Innenteil des einstückigen Körpers (7) entspricht.

14. Verfahren nach Anspruch 11, **dadurch gekennzeichnet, daß** eine Form verwendet wird, die gekrümmte Bereiche besitzt, welche zu einer kontinuierlichen Innenumfangskrümmung (11) in dem Verbindungsbereich der Seiten mit der Sohle führen.

15. Verfahren nach einem der Ansprüche 11 bis 14, **dadurch gekennzeichnet, daß** eine Form so geformt ist, daß der hergestellte einstückige Körper (7) in dem vorderen Innenbereich des einstückigen Körpers (7) eine Mittelrippe (9) enthält, die als ein Füllelement agiert, wenn der einstückige Körper (7) mit dem Obermaterial verbunden wird.

16. Verfahren nach einem der Ansprüche 11 bis 15, **dadurch gekennzeichnet, daß** der einstückige Körper (7) separat in einer Form hergestellt wird und dann mit dem auf dem Schuhspanner aufgebrachten Obermaterial mit Hilfe von Klebstoff verklebt wird.

17. Verfahren nach einem der Ansprüche 11 - 15, **dadurch gekennzeichnet, daß** der einstückige Körper (7) während dessen Herstellung in der Form durch Einspritzen des einstückigen Körpers direkt auf das Obermaterial an dem Obermaterial angebracht wird.

18. Verfahren nach einem der Ansprüche 11 -17, **dadurch gekennzeichnet, daß** eine Form eingesetzt wird, die so geformt ist, daß die Dicke des einstückigen Körpers (7) in verschiedenen Teilstücken des Körpers verschieden bleibt.

19. Verfahren nach einem der Ansprüche 11 bis 18, **dadurch gekennzeichnet, daß** für den einstückigen Körper (7) Natur- oder Synthetikgummi oder irgendein anderes Material mit Eigenschaften, die ähnlich denen von Gummi sind, verwendet wird.

20. Verfahren nach einem der Ansprüche 1 -19, **dadurch gekennzeichnet, daß** der einstückige Körper (7) dergestalt hergestellt wird, daß er auch Füllmittel (1) umfaßt.

## Revendications

1. Chaussure technique d'escalade de montagne, qui comprend une tige et, fixée à ladite tige et entourant ladite tige, une semelle (6), des moyens de renfort (3) pour la partie supérieure du talon, des moyens de renfort (4) pour la pièce d'orteils et les côtés, des moyens de renfort (5) pour le talon, lesdits moyens de renfort (3, 4, 5) et ladite semelle étant faits en un matériau notablement élastique,
caractérisée en ce que
lesdits moyens de renfort (3, 4, 5) et la semelle (6) sont constitués par un corps (7) en une seule pièce formé dans un moule par vulcanisation ou injection ; les dimensions intérieures dudit corps en une seule pièce sont, dans certaines zones, plus petites que les dimensions extérieures de la partie de la tige qu'il entoure, de telle sorte que ledit corps (7) en une seule pièce exerce contre elle une contrainte et une pression appliquée autour de ladite tige, nécessaire pour le maintien correct du pied de l'escaladeur de montagne.

2. Chaussure technique d'escalade de montagne, selon la revendication 1, caractérisée en ce que le corps (7) en une seule pièce comprend à l'intérieur de petits trous (8) non traversants qui servent d'indication du degré d'usure dudit corps en une seule pièce.

3. Chaussure technique d'escalade de montagne, selon la revendication 2, caractérisée en ce que les petits trous (8) sont disposés dans la partie avant du corps (7) en une seule pièce.

4. Chaussure technique d'escalade de montagne, selon l'une quelconque des revendications ci-dessus, caractérisée en ce que le corps (7) en une seule pièce a, dans une zone de liaison des côtés avec la semelle, une courbure (11) périphérique intérieure continue, qui élimine les angles non-ergonomiques, augmentant l'adaptabilité de la chaussure à un pied d'utilisateur.

5. Chaussure technique d'escalade de montagne, selon l'une quelconque des revendications ci-dessus, caractérisée en ce que le corps (7) en une seule pièce comprend une côte (9) centrale dans la zone intérieure avant du corps (7) en une seule pièce, laquelle côte (9) centrale agit en tant qu'élément de remplissage quand le corps (7) en une seule pièce est relié à la tige.

6. Chaussure technique d'escalade de montagne, selon l'une quelconque des revendications ci-dessus, caractérisée en ce que le corps (7) en une seule pièce a été fabriqué dans un moule séparément et ensuite collé à la tige montée sur l'embauchoir au moyen d'un adhésif.

7. Chaussure technique d'escalade de montagne, selon l'une quelconque des revendications 1 à 5, caractérisée en ce que le corps (7) en une seule pièce a été injecté directement sur la tige lors de la fabrication du corps en une seule pièce dans le moule.

8. Chaussure technique d'escalade de montagne, selon l'une quelconque des revendications ci-dessus, caractérisée en ce que l'épaisseur du corps (7) en une seule pièce est différente dans différentes parties de celui-ci.

9. Chaussure technique d'escalade de montagne, selon l'une quelconque des revendications ci-dessus, caractérisée en ce que le corps (7) en une seule pièce est constitué à partir de caoutchouc naturel ou synthétique ou tout autre matériau de caractéristiques similaires,

10. Chaussure technique d'escalade de montagne, selon l'une quelconque des revendications ci-dessus, caractérisée en ce qu'à l'intérieur du corps (7) en une seule pièce, elle comporte des moyens de remplissage (1).

11. Procédé de fabrication de chaussure technique d'escalade de montagne, comprenant la fixation d'une semelle (6), de moyens de renfort (3) pour la partie supérieure du talon, de moyens de renfort (4) pour la pièce d'orteils et les côtés, et de moyens de renfort (5) pour le talon, à une tige, de telle sorte que lesdits semelle (6) et moyens de renfort (3, 4, 5) entourent ladite tige, lesdits semelle (6) et moyens de renfort étant faits en un matériau notablement élastique,
caractérisé en ce que
lesdits semelle (6) et moyens de renfort (3, 4, 5) sont constitués d'un corps (7) en une seule pièce formé dans un moule par vulcanisation ou injection, ledit corps en une seule pièce ayant des dimensions de longueur, largeur et hauteur qui sont plus petites que les dimensions extérieures de ladite tige, de telle sorte que ledit corps (7) en une seule pièce exerce une contrainte sur ladite tige.

12. Procédé selon la revendication 11, caractérisé en ce qu'un moule qui comporte des petits noyaux est utilisé de telle sorte que le corps (7) en une seule pièce fabriqué comporte à l'intérieur de petits trous (8) non traversants, qui servent d'indication du degré d'usure dudit corps (7) en une seule pièce.

13. Procédé selon la revendication 12, caractérisé en ce que les noyaux sont disposés dans la partie du moule qui correspond à la partie intérieure avant du corps (7) en une seule pièce.

14. Procédé selon la revendication 11, caractérisé en ce qu'est utilisé un moule qui a des zones incurvées qui font remonter une courbure (11) périphérique intérieure continue dans la zone de liaison des côtés à la semelle.

15. Procédé selon l'une quelconque des revendications 11 à 14. caractérisé en ce qu'un moule est formé de sorte que le corps (7) fabriqué en une seule pièce comporte une côte (9) centrale dans la zone intérieure avant du corps (7) en une seule pièce, laquelle côte agit en tant qu'élément de remplissage quand le corps (7) en une seule pièce est relié à la tige.

16. Procédé selon l'une quelconque des revendications 11 à 15, caractérisé en ce qu'un corps (7) en une seule pièce est fabriqué dans un moule séparément et ensuite collé à la tige montée sur l'embauchoir au moyen d'un adhésif.

17. Procédé selon l'une quelconque des revendications 11 à 15, caractérisé en ce que le corps (7) en une seule pièce est fixé à la tige au moyen de l'injection du corps en une seule pièce directement sur la tige lors de la fabrication du corps en une seule pièce dans le moule.

18. Procédé selon l'une quelconque des revendications 11 à 17, caractérisé en ce qu'un moule formé de sorte que l'épaisseur du corps (7) en une seule pièce reste différent dans des parties différentes de celui-ci, est utilisé.

19. Procédé selon l'une quelconque des revendications 11 à 18, caractérisé en ce que du caoutchouc naturel ou synthétique ou tout autre matériau présentant des caractéristiques similaires à celles du caoutchouc est utilisé pour le corps (7) en une seule pièce.

20. Procédé selon l'une quelconque des revendications 11 à 19, caractérisé en ce que le corps (7) en une seule pièce est fabriqué de telle sorte qu'il comprend également des moyens de remplissage (1).
